# EUROPEAN PATENT APPLICATION

(11) **EP 4 807 700 A1**
(43) Date of publication of application: **16.09.2026**
(21) Application number: 24922452.8
(22) Date of filing: 26.12.2024
(51) Int. Cl.: G06V 30/19, G06V 30/18, G06V 30/148, G06V 30/14, G06V 10/94, G06F 16/334, G06F 16/31, G06F 16/3329, G06F 16/338, G06F 40/109

(54) **ELECTRONIC DEVICE FOR EXTRACTING WORD INCLUDED IN IMAGE AND METHODS THEREOF**

(30) Priority: 01.02.2024 KR 20240016122
(71) Applicant: Samsung Electronics Co., Ltd., Suwon-si, Gyeonggi-do 16677 (KR)
(72) Inventor: KIM, Jongyeong, Suwon-si, Gyeonggi-do 16677 (KR); HYUN, Hyein, Suwon-si, Gyeonggi-do 16677 (KR); KO, Yejoon, Suwon-si, Gyeonggi-do 16677 (KR); KIM, Kyungsu, Suwon-si, Gyeonggi-do 16677 (KR)
(74) Representative: Gulde & Partner
(86) International application number: PCT/KR2024/021148
(87) International publication number: WO 2025/164943

(57) **Abstract**

An electronic apparatus is disclosed. The electronic apparatus groups characters included in the input image into at least one box based on characteristics of each character, connects adjacent characters included in the at least one box in a plurality of directions to form a plurality of character strings, identifies a frequency of use for each of the plurality of character strings based on a word database including words used by a plurality of users, and extracts one of the plurality of character strings according to the frequency of use. Accordingly, characters included in an image may be accurately detected.

## Description

### [Technical Field]

The present disclosure relates to an electronic apparatus for extracting words included in an image and a method thereof.

### [Background Art]

In the prior art, in order to perform an Internet search or translation, a user had to directly input characters, but with the development of OCR technology, an electronic apparatus has become capable of directly recognizing characters through a captured image or a live view and utilizing the recognized characters as linguistic information.

In utilizing characters included in an image by extracting the characters and using them as linguistic information such as for search or translation, accuracy is very important. In the prior art, although it was possible to detect characters included in an image, since adjacent characters were grouped together and extracted as a word without considering the meaning of the language, there existed a problem in that a word intended by a user to be searched could not be accurately extracted or an error occurred.

Accordingly, there has arisen a need for a method capable of more accurately extracting characters included in an image.

### [Disclosure of Invention]

### [Solution to Problem]

According to at least one embodiment, an electronic apparatus includes memory for storing an input image and a processor.

The processor is configured to group characters included in the input image into at least one box based on characteristics of each character, connect adjacent characters included in the at least one box in a plurality of directions to form a plurality of character strings, identify a frequency of use for each of the plurality of character strings based on a word database including words used by a plurality of users, and extract one of the plurality of character strings according to the frequency of use.

A word extraction method using an electronic apparatus includes grouping characters included in an input image into at least one box based on characteristics of each character, connecting adjacent characters included in an at least one box in a plurality of directions to form a plurality of character strings, identifying a frequency of use for each of the plurality of character strings based on a word database including words used by a plurality of users, and extracting one of the plurality of character strings according to the frequency of use.

In a non-transitory computer-readable recording medium storing one or more instructions that, when executed by a controller of an electronic apparatus, cause the electronic apparatus to perform operations, the operations include grouping characters included in an input image into at least one box based on characteristics of each character, connecting adjacent characters included in an at least one box in a plurality of directions to form a plurality of character strings, identifying a frequency of use for each of the plurality of character strings based on a word database including words used by a plurality of users, and extracting one of the plurality of character strings according to the frequency of use.

### [Brief Description of Drawings]

FIG. 1 is a view provided to explain a word extraction operation of an electronic apparatus according to at least one embodiment;
FIG. 2 is a block diagram illustrating a configuration of an electronic apparatus according to at least one embodiment;
FIGS. 3 and 4 are views provided to explain an example in which characters included in an image are incorrectly detected according to at least one embodiment;
FIGS. 5 to 9 are views provided to explain a method of extracting words from an image according to at least one embodiment;
FIGS. 10 and 11 are views provided to explain a result of correcting words included in an image when the words are incorrectly detected according to an embodiment;
FIG. 12 is a block diagram illustrating a configuration in a case where an electronic apparatus is a smartphone according to at least one embodiment;
FIG. 13 is a flowchart illustrating a method by which an electronic apparatus extracts words included in an image according to at least one embodiment; and
FIG. 14 is a flowchart illustrating a method by which an electronic apparatus extracts words included in an image according to frequency of use according to at least one embodiment.

### [Mode for Invention]

General terms that are currently widely used are selected as the terms used in the embodiments of the disclosure in consideration of their functions in the disclosure, but may be changed based on the intention of those skilled in the art or a judicial precedent, the emergence of a new technique, or the like. In addition, in a specific case, terms arbitrarily chosen by an applicant may exist, in which case, the meanings of such terms will be described in detail in the corresponding descriptions of the disclosure. Thus, the terms used in the embodiments of the disclosure need to be defined on the basis of the meanings of the terms and the overall contents throughout the disclosure rather than simple names of the terms.

In the disclosure, the expressions "have", "may have", "include" or "may include" used herein indicate existence of corresponding features (e.g., elements such as numeric values, functions, operations, or components), but do not exclude presence of additional features.

The expression "at least one of A or/and B" should be understood as indicating any one of "A", "B" and "both of A and B."

The expressions "first", "second", "1st," "2nd," or the like, used in the disclosure may indicate various components regardless of sequence and/or importance of the components, will be used only in order to distinguish one component from the other components, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element, or they may be coupled with/to or connected to each other through an intervening element (e.g., a third element).

The term of a singular number may include its plural number unless explicitly indicated otherwise in the context. It is to be understood that a term "include", "formed of", or the like used in the application specifies the presence of features, numerals, steps, operations, components, parts, or combinations thereof, mentioned in the specification, and does not preclude the presence or addition of one or more other features, numerals, steps, operations, components, parts, or combinations thereof.

In the disclosure, a "module" or a "unit" may perform at least one function or operation, and be implemented by hardware or software or be implemented by a combination of hardware and software. In addition, a plurality of "modules" or a plurality of "units" may be integrated into at least one module and be implemented by at least one processor (not shown) except for a 'module' or a 'unit' that needs to be implemented by specific hardware.

In the present disclosure, the term "user" may refer to a person who uses an electronic apparatus or a device used by the person.

Hereinafter, an embodiment of the present disclosure will be described in greater detail with reference to the accompanying drawings.

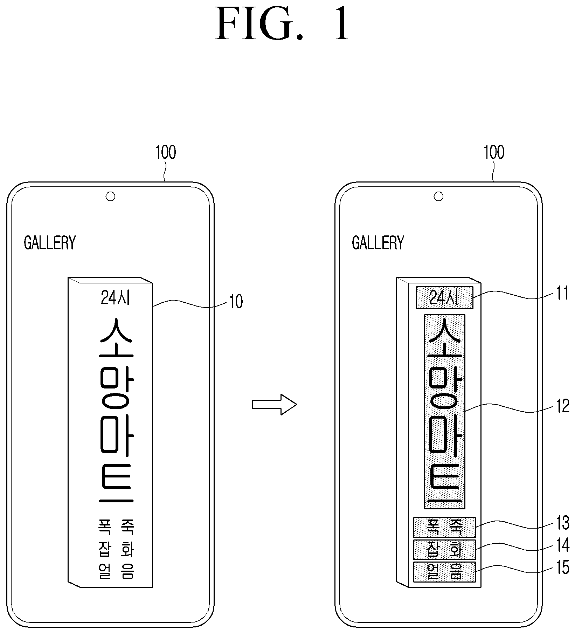

FIG. 1 is a view provided to explain a word extraction operation of an electronic apparatus according to at least one embodiment.

According to FIG. 1, an electronic apparatus 100 may recognize characters included in an image and extract linguistically meaningful words by using position information and language information of each character.

In FIG. 1, an image 10 may be input in various ways. For example, the image 10 may be an image previously stored in a memory of the electronic apparatus 100, may be obtained by being captured by a built-in camera or an external camera, may be obtained by downloading an image from a server, or may be obtained by receiving an image from an external apparatus. In addition, the image may include not only a captured image obtained by a camera but also a live view image corresponding to light incident through a camera lens and formed on an image sensor.

Further, characters included in the image may be characters of various languages, and may include not only characters but also symbols or numbers. In FIG. 1, the electronic apparatus 100 is illustrated as a smartphone; however, the present disclosure is not limited thereto, and the electronic apparatus 100 may be implemented as various types of electronic apparatuses such as a server apparatus, a PC, a laptop PC, a tablet PC, a set-top box, a TV, a kiosk, and other home appliances. When the electronic apparatus 100 is implemented as a server apparatus or a set-top box, an external camera or an external display apparatus may be connected and used.

When the electronic apparatus 100 receives the image 10, the electronic apparatus 100 groups characters included in the input image based on characteristics of each character and divides the characters into at least one box. In addition, the electronic apparatus 100 connects adjacent characters included in the at least one box in a plurality of directions to form a plurality of character strings, identifies a frequency of use of each of the plurality of character strings based on a word database including words used by a plurality of users, and extracts one of the plurality of character strings according to the frequency of use.

In the present disclosure, a box refers to a virtual region for specifying a portion including characters or words extracted by the electronic apparatus, and may alternatively be described as a block or a region; however, in the present disclosure, the term box is used to facilitate intuitive understanding.

In addition, the word database may be a data set including various words. The word database may alternatively be referred to as a word set, a library, a word group, or a word collection; however, in the present disclosure, it is described as a word database. The word database may be previously stored in the memory of the electronic apparatus 100 or may be stored in an external server. The external server may be a workstation, a cloud, a data drive, a data station, or the like. For example, in the case of an SNS server, a word database may be formed by collecting words uploaded by various users on a social network. Words included in posts uploaded to web pages in other web servers may also be extracted and stored in the form of a database.

When the image 10 of a signboard as shown in FIG. 1 is input to the electronic apparatus 100, the electronic apparatus 100 divides characters included in the image 10 on a character-by-character basis. In the example of FIG. 1, the characters "24 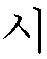 " may be divided into "2", "4", and " 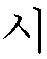 ". In FIG. 1, the image 10 including characters written in Korean is illustrated. In Korean, consonants and vowels are combined to form one syllable, and at least one syllable may be combined to form a word. In this case, the character unit described above may correspond to a syllable unit. On the other hand, in English, at least one alphabet arranged in one direction may form a word. Therefore, in English, the electronic apparatus 100 may divide characters on an alphabet basis. In Chinese, characters may be divided on a Chinese character basis, and in Japanese, characters may be divided on a Chinese character, Hiragana, or Katakana basis. Hereinafter, description will be made based on Korean.

After dividing characters into character units, the electronic apparatus 100 performs grouping of characters having similar characteristics by considering characteristics such as size of each character, distance between characters, font, and the like. In the present disclosure, grouping may refer to an operation of specifying characters included in the same box.

In the case of FIG. 1, since fonts of all words included in the signboard image 10 are identical, the electronic apparatus 100 performs grouping based on character size and distance. As a result, the electronic apparatus 100 forms a total of three groups, divided into "2, 4, 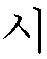 ," " 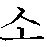 , 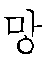 , 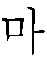 , 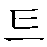 ," and " 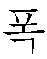 , 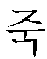 , 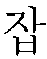 , 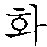 , 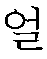 , 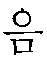 ." In the present disclosure, a group may be a region composed of at least one box. In other words, in FIG. 1, "2, 4, 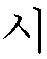 " and " 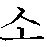 , 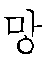 , 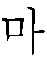 , 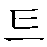 " are each identified as one box 11 and 12, respectively, and the group " 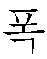 , 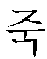 , 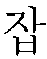 , 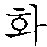 , 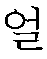 , 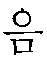 " is divided into three boxes 13, 14, and 15.

In order to determine whether there is a possibility that characters in each box are connected to form a word, the electronic apparatus 100 compares characteristics of the formed boxes. In FIG. 1, since the three formed groups have different characteristics such as box size and direction, they are determined as groups having no association possibility. Therefore, adjacent characters within each box are connected to form character strings. A character string may be a value in which a plurality of characters are arranged continuously.

At this time, since "2, 4, 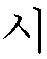 " and " 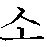 , 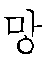 , 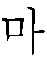 , 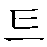 " written in the signboard image 10 have only a horizontal connection direction of the character string, there is a low possibility that the words will be incorrectly extracted. However, since " 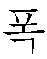 , 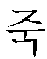 , 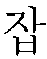 , 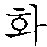 , 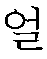 , 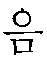 " may be read horizontally or vertically, there is a possibility that it may be read as meaningless words such as " 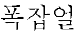 " or " 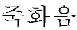 ," instead of meaningful words such as " 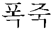 (firecracker)," " 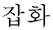 (merchandise)," and " 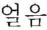 (ice)."

In this case, in order to extract accurate words, the electronic apparatus 100 identifies a frequency of use of each of the plurality of character strings based on a word database including words used by a plurality of users. Since " 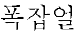 " and " 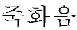 " are non-existent words, such words will not be retrieved from the word database, and the electronic apparatus 100 may accurately extract characters included in the signboard image 10 as the words "24 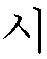 (24 hours)" 11, " 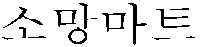 (SOMANG mart)" 12, " 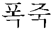 (firecracker)" 13, " 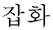 (general merchandise)" 14, and " 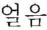 (ice)" 15.

In the above-described operation of the electronic apparatus 100, details regarding the grouping process of characters, comparison between boxes, and connection directions of words will be described later in detail with reference to other drawings.

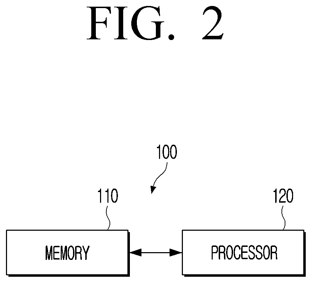

FIG. 2 is a block diagram illustrating a configuration of an electronic apparatus according to at least one embodiment.

According to FIG. 2, the electronic apparatus 100 includes memory 110 and a processor 120.

The memory 110 is configured to store various software programs, instructions, control codes, and data necessary for operation of the electronic apparatus 100. The memory 110 may be implemented as at least one of various types of memories including Dynamic Random Access Memory (DRAM), Static Random Access Memory (SRAM), Synchronous Dynamic Random Access Memory (SDRAM), One Time Programmable Read Only Memory (OTPROM), Programmable Read Only Memory (PROM), Erasable Programmable Read Only Memory (EPROM), Electrically Erasable Programmable Read Only Memory (EEPROM), Mask Read Only Memory (Mask ROM), Flash Read Only Memory (Flash ROM), flash memory, a hard drive, or a Solid State Drive (SSD).

According to at least one embodiment of the present disclosure, the memory 110 may store an input image or may store a word database including words used by a plurality of users. In addition, the memory 110 may store software modules for allowing the processor 120 to perform operations. Specifically, the memory 110 may store various software modules including a module for detecting a character region in a screen, a module for recognizing characters in the character region, and a module capable of readjusting characters into a correct unit and direction in consideration of linguistic directionality and a region of recognized characters.

The processor 120 is configured to control overall operations of the electronic apparatus 100.

The processor 120 may include or may be defined as one or more of a Digital Signal Processor (DSP) that processes digital signals, a microprocessor, a Central Processing Unit (CPU), a Micro Controller Unit (MCU), a Micro Processing Unit (MPU), a controller, an Application Processor (AP), a Communication Processor (CP), an Advanced RISC Machine processor (ARM processor), or an Artificial Intelligence Processor (AI processor). In addition, the processor 120 may be implemented as a System on Chip (SoC) in which processing algorithms are embedded, a Large Scale Integration (LSI), or a Field Programmable Gate Array (FPGA). The processor 120 may perform various functions by executing computer executable instructions stored in the memory 110. The processor 120 may include one processor or a plurality of processors.

The processor 120 performs various operations by using the memory 110.

Specifically, when an image is transmitted from an external apparatus through a wired or wireless communication method, or when an image is input through a camera embedded in the electronic apparatus 100 or a connected camera, the processor 120 may store the input image in the memory 110. Alternatively, an image may have been previously stored in the memory 110.

The processor 120 identifies characters included in the image stored in the memory 110 on a character-by-character basis by using a character recognition module. The processor 120 identifies characteristics of each identified character. The characteristics may include various types of information such as size, color, font, and position of each character. When characters having identical or similar characteristics are located within a predetermined distance range, the processor 120 may group the characters and divide them into at least one box.

In addition, the processor 120 may connect adjacent characters included in each box in a plurality of directions to form a plurality of character strings. The plurality of directions may include a horizontal direction, a vertical direction, and a diagonal direction, but is not limited thereto and may include directions connected at various angles. For example, in most countries, words are generally written in a horizontal direction; however, in some countries, words may be written in a vertical direction. In advertisements or other postings, words may be written diagonally or along a curved direction. When a plurality of characters are sequentially arranged in such various directions, the processor 120 may connect the characters to form one character string.

The processor 120 may search the formed character strings in the word database, and identify a frequency of use of each character string. When the frequency of use is zero or extremely low, the processor 120 may determine that the character string is meaningless. In contrast, when the frequency of use is equal to or greater than a threshold frequency, the processor 120 may recognize the character string as forming a linguistically meaningful word in the image. The recognized word may be utilized in various ways, which will be described later in detail.

Meanwhile, although it has been described above that the processor 120 directly detects boxes from the input image, the grouping method may be implemented in various ways. As an example, the processor 120 may perform grouping using a Bitmap Clustering method.

Specifically, the processor 120 may first detect a region in the input image where characters exist. The operation of detecting the region where characters exist may be performed by a module for detecting a character region. The character region may be a partial image including an object estimated to be a character.

The method of detecting the character region may be performed according to various algorithms. As an example, the processor 120 may identify pixel values of each pixel in the input image, and detect a region in which identical or similar ranges of pixel values are continuously arranged. The processor 120 may determine whether pixel values and a shape of the detected region correspond to characters, and may detect a surrounding region including the characters as a character region. The character region may correspond to the character itself; however, the present disclosure is not limited thereto, and a background region around the character may also be detected together as the character region. In other words, the processor 120 may detect a character region by cutting out portions including characters from the entire input image. When the character region is detected, the processor 120 may identify a rotation angle (box direction) of the detected character region. When a user captures an image using a camera, the image is generally captured while the camera is held vertically with respect to the ground; however, depending on circumstances, the camera may be rotated horizontally or upside down. Accordingly, an image captured in such a state may be rotated by various angles such as 90 degrees, 180 degrees, or 270 degrees relative to a normally captured image. The processor 120 may detect at least one character in the image and compare shapes of phonemes constituting the character (for example, 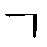 , 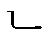 , 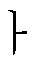 , 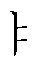 , etc.) with normal phoneme shapes to identify a rotation angle of the image. In the case of alphabets, the processor 120 may identify the rotation angle by comparing a shape of each alphabet with a reference shape.

Alternatively, the processor 120 may recognize a rotation direction and a rotation angle of the image based on metadata added to the image. In other words, when a device that captures the image includes a geomagnetic sensor, a gyro sensor, or an azimuth sensor, the device may detect a pitch angle, a roll angle, and a yaw angle based on output values of the respective sensors at the time of capturing, and may include the detected values in metadata of the image. The electronic apparatus 100 may recognize the rotation direction and the rotation angle of the image based on the pitch angle, roll angle, and yaw angle included in the metadata. When template matching or pattern recognition techniques are used for character recognition, rotated characters may not match general templates or patterns, thereby reducing accuracy of the character recognition function of the processor 120. In consideration of this, the processor 120 may identify the rotation angle and direction of the detected character region and determine whether words including characters are written in a horizontal direction or a vertical direction.

When a character region is detected, the processor 120 may identify a box direction based on the rotation angle of the character region and a confidence score regarding a comparison result between characters. The box direction may refer to an arrangement direction of boxes in which characters included in the character region are grouped. Specifically, the box direction may be a horizontal direction, a vertical direction, a diagonal direction, or another curved direction.

In addition, in order to extract characters within a box, the processor 120 may identify a center position of each individual character. Specifically, the processor 120 may identify an entire area occupied by one syllable based on sizes and mutual distances of phonemes constituting the syllable, and may identify a central portion within the entire area as the center position. Based on the center position of each individual character, the processor 120 may divide characters on a character-by-character basis.

After the process of dividing the characters, the processor 120 identifies characteristics of each divided individual character through a module for analyzing characteristics of characters. Specifically, the processor 120 may identify font characteristics, color, size, and the like of each character. The processor 120 compares similarity of the identified characteristics and groups characters that fall within a similar range and are adjacent to each other into one box.

Meanwhile, when a plurality of characters exist in the image, a plurality of boxes may be identified through grouping. When characters included in the input image are divided into a plurality of boxes, the processor 120 identifies a connection possibility between characters included in each of the plurality of boxes based on positions and distances between the plurality of boxes. At this time, factors to be considered may include, as described above, a size of each box, a linear distance between boxes, and an overlapping area (Projection IOU) when the boxes are moved to overlap with each other.

The processor 120 determines that two boxes are related as similarity in size increases, distance between boxes decreases, and area of overlap increases. In addition, positions, sizes, and order of characters included in each box may also be used as criteria for determination. The reason for determining whether association exists between boxes is that, after the step of recognizing individual characters, connections between characters may not have been properly established during the grouping process.

As another embodiment for determining connection possibility between characters, a method of directly comparing coordinates or sizes of individual characters without determining association between boxes may be used. However, in the present specification, description will be mainly focused on a method of determining connection possibility between characters by comparing association between boxes.

If two boxes are determined to have association, even if identified characters have been grouped into different groups, there is a possibility that words of the groups may be connected at least one by one to form a word. On the other hand, if no association exists between two boxes, characters included in different boxes cannot be connected to each other, and connection possibility exists only among characters within the same box.

When association between boxes is identified, the processor 120 forms a plurality of character strings with respect to characters that may be connected. Characters may be connected in various directions to form character strings.

Through the various methods described above, the processor 120 may form character strings. When a plurality of character strings are formed, the processor 120 identifies a frequency of use of each character string based on the word database, and when the frequency of use exceeds a threshold value, extracts the character string. The extracted character string may be identified as a word included in the corresponding image.

As described above, the word database may be data collected from words that are actually used, and may be stored directly in the electronic apparatus 100 or stored in an external apparatus. Since the processor 120 extracts words based on data of a plurality of users, more accurate results may be obtained.

Specifically, the processor 120 may form a first character string by connecting adjacent characters included in at least one box in a horizontal direction, a second character string by connecting them in a vertical direction, and a third character string by connecting them in a diagonal direction. The processor 120 may identify a frequency of use for each formed character string based on the word database, and when the identified frequency of use exceeds the threshold value, determines that the character string is a linguistically meaningful word and extracts the character string as a word.

Meanwhile, a plurality of words may be included within one character string. In other words, when a plurality of words are sequentially written at regular intervals without spacing, the words may be recognized as one character string.

If a plurality of words are included in at least one of the first to third character strings, the processor 120 may detect each of the plurality of words included in the character string. The processor 120 may identify a frequency of use for each detected word based on the word database described above, and extract at least one word having a frequency of use exceeding the threshold value. A detailed example thereof will be described later.

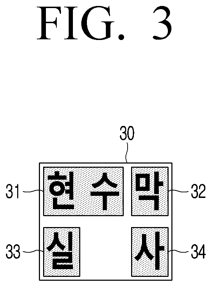

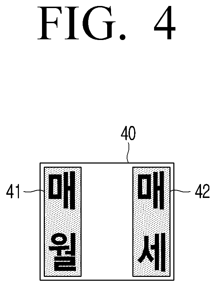

FIGS. 3 and 4 are views provided to explain an example in which characters included in an image are incorrectly detected according to at least one embodiment.

According to FIG. 3, words included in a first signboard image 30 are detected in a divided manner.

Words included in the first signboard image 30 are " 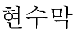 (HyunSuMak; banner)" and " 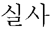 (SilSa; actual image printing)," and according to the prior art, since a distinction between words is not accurately performed, there is a risk that the characters are detected separately as " 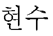 (HyunSu; 31)," " 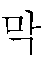 (Mak; 32)," " 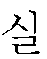 (Sil; 33)," and " 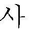 (Sa; 34)."

In addition, according to FIG. 4, words included in a second signboard image 40 are detected as being divided in an incorrect direction.

Words included in the second signboard image 40 are " 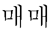 (MaeMae; deal)" and " 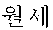 (WeolSae; monthly rent)," and according to the prior art, here is a risk that words written in a horizontal direction are incorrectly determined as being in a vertical direction, and meaningless words such as " 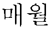 (MaeWeol; 41)" and " 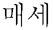 (MaeSae; 42)" are extracted.

For example, in the case of an image composed of English words, when the word "Rent" is written horizontally below the word "Sale" written horizontally, there is a risk that the words are not normally recognized as "Sale" and "Rent," but instead may be recognized as four words "SR," "AE," "Ln," and "ET."

Such problems occur because, in the prior art, the grouping and direction of characters are determined only based on the positions of the characters, such as whether the characters are adjacent to each other, without considering a user's word usage frequency or linguistic information of the corresponding characters. According to various embodiments of the present disclosure, such risks can be minimized.

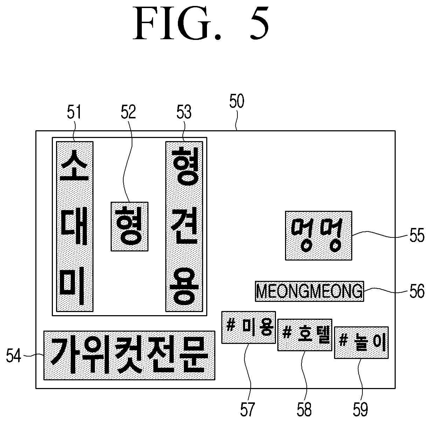

Hereinafter, detailed examples of extracting words by considering both linguistic information and positional information of characters will be described with reference to FIGS. 5 to 9.

FIGS. 5 to 9 are views provided to explain a method of extracting words from an image according to various embodiments.

FIG. 5 illustrates an image including various words having different writing directions and fonts.

Before extracting words, the processor 120 detects a character region by using a module for detecting a character region. Accordingly, the processor 120 recognizes all characters included in the image and separates portions that are characters from portions that are not characters.

FIG. 5 illustrates a state in whcih " 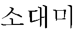 (Sodaemi; 51)," " 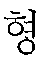 (Hyung; 52)," " 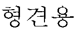 (HyungGyeonYong; 53)," " 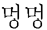 (MeongMeong; 55)," "Meong-meong (56)," " 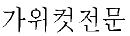 (GawiCutJeonmun; 54)," "# 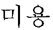 (Miyong; 57)," "# 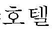 (Hotel; 58)," and "# 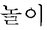 (NolE; 59)" are extracted as character regions. The step of detecting a character region, as described above, is a step of detecting only regions in which characters exist before extracting linguistically meaningful words. Accordingly, even if characters are grouped into the same region in this step, they may not have linguistic meaning. For example, among the detected character regions in FIG. 5, " 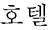 (Hotel; 58)" has the linguistic meaning of a lodging establishment, whereas " 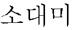 (Sodaemi; 51)" does not have a linguistic meaning.

After detecting character regions, the processor 120 performs a process of recognizing individual characters and recombining them to extract meaningful words. In this case, the processor 120 may identify a rotation angle of the character region (box direction), a center position, and the like. Since this has been described above, redundant description will be omitted. The processor 120 divides the character region into character units based on a center position of each character. The reason for identifying the center position of each character is to accurately divide the character string arranged at regular intervals within the character region into individual characters.

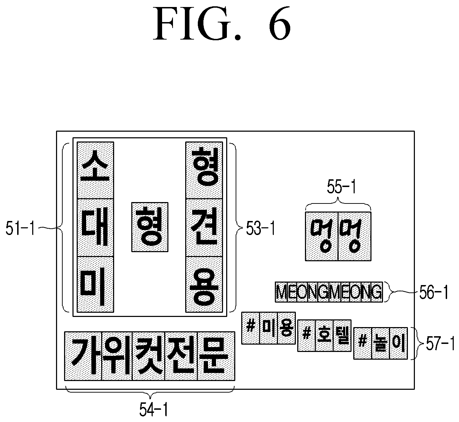

FIG. 6 illustrates a state in which characters within a character region are divided on a character-by-character basis.

According to FIG. 6, the processor 120 identifies that character regions including " 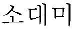 (Sodaemi; 51)" and " 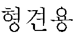 (HyungGyeonYong; 53)" are arranged vertically, divides the character regions in a horizontal direction (51-1, 53-1), and recognizes individual characters " 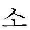 (So)," " 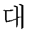 (Dae)," " 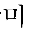 (Mi)," " 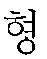 (Hyung)," " 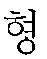 (Hyung)," " 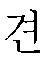 (Gyeon)," and " 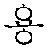 (Yong)" (51-1, 53-1). The remaining character regions are arranged horizontally, and therefore the processor 120 divides the character regions in a vertical direction to recognize individual characters (54-1, 55-1, 56-1, 57-1).

After recognizing individual characters, the processor 120 performs bitmap clustering, as described above with reference to FIG. 2, to determine whether at least one of font or size among characters identified on a character-by-character basis falls within a similar range and whether the characters are adjacently arranged in a horizontal direction, a vertical direction, or a diagonal direction, and groups characters having similar characteristics.

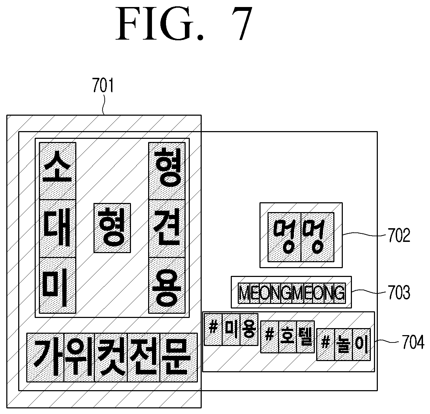

FIG. 7 illustrates a state in which character regions having similar font and size and being adjacent are grouped and divided into boxes. Characters included in a first character region (51-1), an individual character " 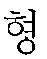 (Hyung)," and characters included in a second character region (53-1) are adjacent to each other and have similar fonts and character sizes. In addition, characters included in a third character region (54-1) and individual characters included in the above-described character regions are located at adjacent distances and have similar fonts and character sizes, and thus may be divided into one group (hereinafter, referred to as a first group 701). On the other hand, characters included in the first group 701 are not adjacent to characters included in other character regions located on the right side and have different fonts and clearly different character sizes, and thus cannot be grouped into the same group.

As described above, characters included in a fourth character region (55-1), characters included in a fifth character region (56-1), and characters included in a sixth character region (57-1) are not located at adjacent positions and have differences in font and character size. However, characters included in the fourth character region (55-1) have similar font and character size and are adjacent, and thus may be grouped into the same group. Accordingly, characters included in the fourth character region are not grouped into a single group together with other character regions, and instead form a single group by themselves (hereinafter, referred to as a second group 702). Other character regions not described above also form their own groups for the same reasons. In FIG. 7, the processor 120 may set a total of four boxes. In the following description, a box composed of characters (56-1) included in the fifth character region (56) will be referred to as a third box 703, and a box composed of characters (57-1) included in the sixth character region (57, 58, 59) will be referred to as a fourth box 704.

After grouping is completed, the processor 120 identifies connection possibility between characters included in each of a plurality of boxes based on positions and distances between the plurality of boxes. In other words, characters that have a possibility of forming a meaningful word are connected. In order to determine this, association between boxes that distinguish character groups is first determined. As described above with reference to FIG. 2, if two boxes have association, even if characters are grouped into different groups, there is a possibility that they may be connected to form a word. On the other hand, if no association exists between two boxes, characters included in different boxes cannot be connected to each other and connection possibility exists only among characters within the same box.

Since factors for determining connection possibility have been described above, redundant description will be omitted.

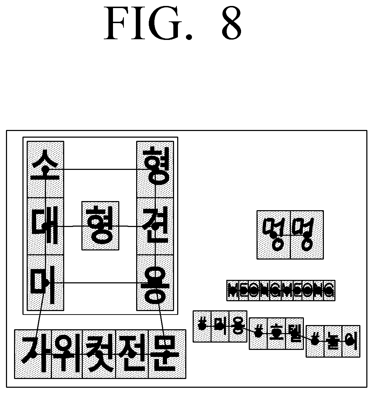

According to FIG. 8, the first box 701 and the second box 702 have a large difference in size, are not adjacent to each other, and are far apart to the extent that characters cannot be connected to form a word, and thus the two boxes have no association. Therefore, characters in the first box 701 and characters in the second box 702 cannot be connected to each other. In the same manner, it may be determined that the first box 701 has no association with the third box 703. Although the fourth box 704 is adjacent to the first box 701, positions of characters within each box lack consistency and are unnatural in terms of connection direction for forming one word, and thus the two boxes may be determined to have no association. Accordingly, characters in the first box 701 may be connected only within the box. Through the above-described determination method, it may also be determined that the second box 702 to the fourth box 704 have no association with other boxes, and characters may be connected only within each box.

When association between boxes is determined, the electronic apparatus 100 forms a character string that is a candidate for forming a word by connecting characters. Taking the character " 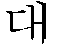 (Dae)" in the first box as a reference, a total of two character strings may be formed: " 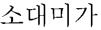 (SoDaeMiGa)" in a vertical direction and " 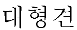 (DaeHyungGyeon)" in a horizontal direction. As such, various character strings may be formed depending on the direction in which the characters are connected to form a word. Meanwhile, there may be a case in which the connection direction of characters is formed only in one direction. This corresponds to a case where a character string can be formed only in a horizontal direction, such as in the second box to the fourth box. In this case, one character string is formed.

After forming character strings, the processor 120 identifies a frequency of use of each character string based on the word database and, when the frequency of use exceeds a threshold value, determines that the character string has linguistic meaning and extracts the word.

Since " 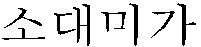 (SoDaeMiGa)" is a non-existent word, it is not retrieved in the word database, whereas " 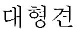 (DaeHyungGyeon)" has the meaning of a big-sized dog, and thus a frequency of use of " 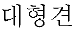 (DaeHyungGyeon)" exceeds the threshold value in the word database. Ultimately, the processor 120 extracts the word " 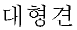 (DaeHyungGyeon)."

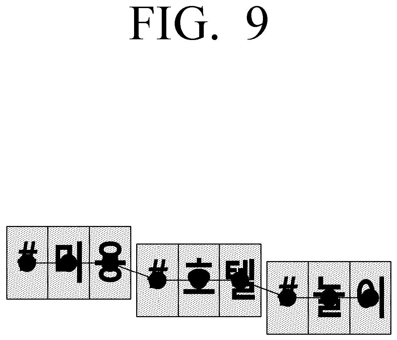

In addition, as illustrated in FIG. 9, there may be a case in which a character string includes a plurality of linguistically meaningful words. In other words, "# 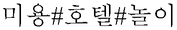 " in FIG. 9 is a character string including three words: " 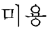 ," " 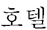 ," and " 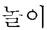 ." In this case as well, words whose frequency of use exceeds a threshold value may be extracted through the word database as described above. The processor 120 identifies various possible combinations of adjacent characters in the character string "# 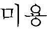 # 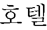 # 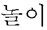 " in FIG. 9 that may constitute words, and based on the word database, may divide the character string into "# 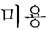 (Miyong; #grooming shop)," "# 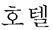 (Hotel; #hotel)," and "# 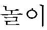 (NolE; #play)" to extract words having linguistic meaning.

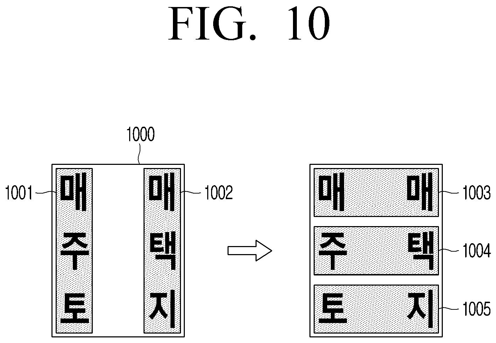

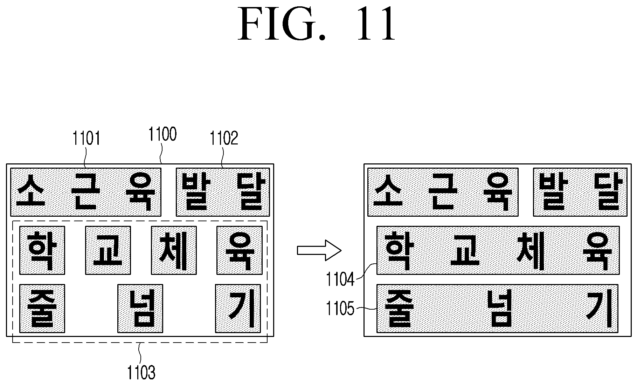

FIGS. 10 and 11 are views provided to explain a result of correcting words included in an image when the words are incorrectly detected according to an embodiment.

According to FIG. 10, words originally included in a signboard image 1000 are " 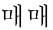 (MaeMae; deal) (1003)," " 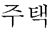 (JuTaek; house) (1004)," and " 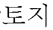 (ToJi; land) (1005)." However, if words are detected by grouping character progression directions differently from their linguistic meaning, meaningless words such as " 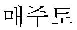 (MaeJuTo; 1001)" and " 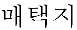 (MaeTaekJi; 1002)" may be identified. According to various embodiments of the present disclosure, since a frequency of use of formed character strings is determined according to word connection directions, such errors may be resolved.

The image 1100 of FIG. 11 illustrates a case in which word progression direction is correctly determined, but word units are not properly grouped, thereby causing an error. In an erroneous region 1103, words that should originally be extracted are " 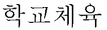 (HakGyoCheYook; school physical education) (1104)" and " 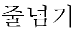 (JulNeomGi; jump rope) (1105)," but due to improper connection of characters, an error may occur. According to various embodiments of the present disclosure, such an error may be resolved through a grouping operation and a method of determining association between boxes.

As described above with reference to FIGS. 2 to 9, the word extraction method described may more accurately extract words included in an image since it considers not only the positions of characters but also linguistic characteristics

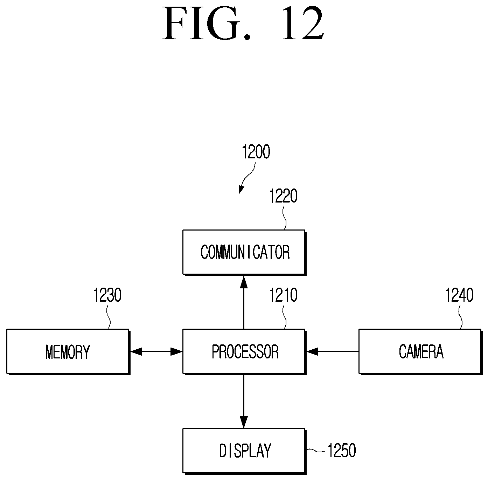

FIG. 12 is a block diagram illustrating a configuration in a case where an electronic apparatus is a smartphone according to at least one embodiment.

According to FIG. 12, a smartphone 1200 includes memory 1230, a communicator 1220, a camera 1240, a display 1250, and a processor 1210.

The memory 1230 stores various software programs, instructions, control codes, and data necessary for operation of the smartphone 1200. Since specific examples of memory have been described above with reference to FIG. 2, redundant description will be omitted.

The communicator 1220 is configured to perform communication with at least one external apparatus.

For example, the smartphone 1200 may perform communication with other external apparatuses through the communicator 1220. Specifically, the communicator 1220 may perform communication with external apparatuses storing the word database.

The processor 1210 may transmit a plurality of character strings formed as described above to an external apparatus through the communicator 1220, and may receive information regarding a frequency of use of each of the plurality of character strings from the external apparatus.

Specifically, the processor 1210 may perform communication with a web portal server through the communicator 1220 to download information of a database of words actually used by users and store or periodically update the information in the memory 1230, and the processor 1210 may download images existing on a web server and extract words therefrom.

The communicator 1220 may transmit and receive various signals and data with external apparatuses through various wired or wireless communication methods including Bluetooth (Bluetooth), Wireless Fidelity (Wi-Fi) based on an access point (AP) (a Wireless Local Area Network), Zigbee, wired and/or wireless Local Area Network (LAN), Wide Area Network (WAN), Ethernet (Ethernet), Institute of Electrical and Electronics Engineers 1394 (IEEE 1394), High-Definition Multimedia Interface (HDMI), Universal Serial Bus (USB), Mobile High-Definition Link (MHL), Audio Engineering Society/European Broadcasting Union (AES/EBU), optical, and coaxial communication methods.

The camera 1240 is hardware embedded in the smartphone 1200 that provides photographing and video recording functions.

When implemented in a smartphone form including the camera 1240 as illustrated in FIG. 12, the smartphone 1200 may identify characters included in a photographed image captured by the camera 1240 or in a live view image corresponding to light incident through the camera, in the manner described above.

The display 1250 is configured to display various screens under control of the processor 1210. The display 1250 may be implemented as a display including a self-emissive device or as a display including a non-self-emissive device and a backlight. For example, the display 1250 may be implemented in various forms such as a Liquid Crystal Display (LCD), an Organic Light Emitting Diodes (OLED) display, a Light Emitting Diodes (LED) display, a micro Light Emitting Diodes (micro LED) display, a Mini LED display, a Plasma Display Panel (PDP), a Quantum dot (QD) display, or a Quantum dot light-emitting diodes (QLED) display. The display 1250 may further include driving circuits implemented in forms such as amorphous silicon Thin Film Transistor (a-si TFT), Low Temperature Poly Silicon Thin Film Transistor (LTPS) TFT, or Organic TFT (OTFT), and may include a backlight unit.

The processor 1210 is configured to control overall operations of the smartphone 1200. Since types and specific examples of the processor 1210 have been described above, redundant description will be omitted.

In FIG. 12, the processor 1210 stores a captured image obtained by the camera 1240 in the memory 1230 of the smartphone 1200, or receives an image including words by using a live view image corresponding to light incident through the camera.

Since the process by which the processor 1210 receives an image and extracts words has been described above, redundant description will be omitted.

The processor 1210 may use words extracted from an image in various ways. For example, the processor 1210 may control the display 1250 to search the corresponding web using the words extracted from the image as keywords and to display the search results.

Alternatively, the processor 1210 may control the display 1250 to display a foreign language translation result of the word extracted from the image together with the image. In this case, as described above, the arrangement direction of the translation result may be determined according to the arrangement direction of the word in the image. In other words, with respect to a word 12 written in a vertical direction as shown in FIG. 1, the processor 1210 may control the display 1250 to display a foreign language translation result in a vertical direction at one side of the word 12.

For such an operation, the processor 1210 searches for information corresponding to the extracted character string (word) from at least one external apparatus connected through the communicator 1220 and controls the display 1250 to display a search result.

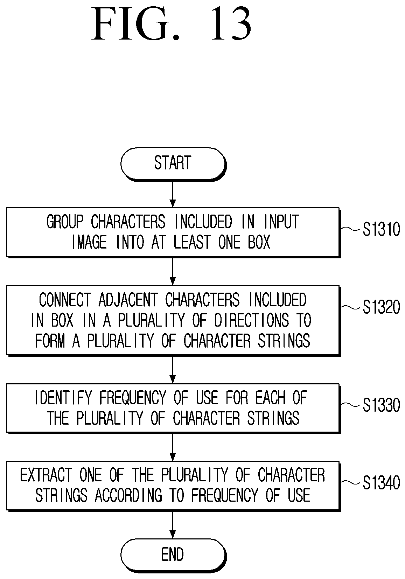

FIG. 13 is a flowchart illustrating a method by which an electronic apparatus extracts words included in an image according to at least one embodiment.

According to FIG. 13, when an electronic apparatus receives an image, the electronic apparatus groups characters included in the input image based on characteristics of each character and divides the characters into at least one box (S1310). When the characters are grouped and divided into boxes, adjacent characters included in the at least one box are connected in a plurality of directions to form a plurality of character strings (S1320). In addition, the electronic apparatus identifies a frequency of use of each of the plurality of character strings based on a word database including words used by a plurality of users (S1330), and may extract one of the plurality of character strings according to the frequency of use (S1340).

Since specific examples of the operation of extracting words included in an image have been described above, redundant description will be omitted.

The control method of FIG. 13 may be performed by the electronic apparatus 100 having the configuration described with reference to FIG. 2 or FIG. 12, but is not necessarily limited thereto and may be performed by an apparatus having a configuration different therefrom.

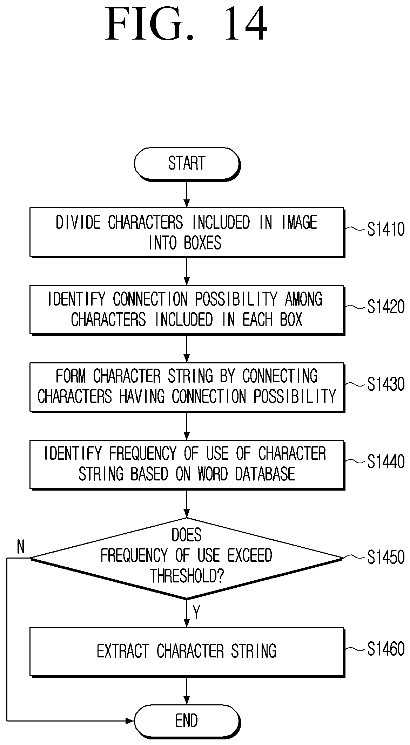

FIG. 14 is a flowchart illustrating a method by which an electronic apparatus extracts words included in an image according to frequency of use according to at least one embodiment.

According to FIG. 14, when characters included in an image are divided into a plurality of boxes (S1410), the electronic apparatus identifies connection possibility between characters included in each of the plurality of boxes based on positions and distances between the plurality of boxes (S1420).

In addition, the electronic apparatus connects characters having connection possibility to form a character string (S1430), and identifies a frequency of use of the character string based on the word database (S1440). The electronic apparatus determines whether the frequency of use of the character string exceeds a threshold value (S1450), and when the threshold value is exceeded, extracts the character string (S1460).

Since specific examples of extracting words according to frequency of use have been described above, redundant description will be omitted.

The control method of FIG. 14 may be performed by the electronic apparatus 100 having the configuration described with reference to FIG. 2 and FIG. 12, but is not necessarily limited thereto and may be performed by an apparatus having a configuration different therefrom.

Programs or instructions for performing the various information processing methods described above may be provided in a state stored in a non-transitory readable medium. The non-transitory readable medium may be mounted on a device capable of calling stored instructions from the storage medium and performing operations according to the called instructions. Accordingly, when a program or instructions stored in the non-transitory readable medium are executed by a processor, the processor may directly perform the operations described in the various embodiments above, or may perform the operations under control of the processor by using other components.

A non-transitory computer-readable medium refers to a medium that stores data semi-permanently and is readable by a device, rather than a medium that stores data for only a short moment, such as a register, cache, or memory. Specific examples of the non-transitory computer-readable medium may include a Compact Disc (CD), a Digital Versatile Disc (DVD), a hard disk, a Blu-ray disc, a Universal Serial Bus (USB), a memory card, a Read Only Memory (ROM), etc.

The instructions may include code generated or executed by a compiler or an interpreter. A device-readable storage medium may be provided in a form of a non-transitory storage medium. Here, "non-transitory" means that the storage medium does not include a signal and is tangible, but does not distinguish whether data is stored semi-permanently or temporarily in the storage medium.

In addition, according to an embodiment of the present disclosure, the method according to the various embodiments described above may be provided as being included in a computer program product. The computer program product may be traded between a seller and a purchaser as a commodity. The computer program product may be implemented not only as the above-described non-transitory readable recording medium but also as a product distributed online through an application store. In the case of online distribution, at least a portion of the computer program product may be at least temporarily stored in a storage medium, such as a memory of a server of a manufacturer, a server of an application store, or a relay server, or may be temporarily generated.

Accordingly, in a non-transitory computer-readable recording medium storing one or more instructions executed by a processor of an electronic apparatus to cause the electronic apparatus to perform operations, the operations of the recording medium,

include grouping characters included in an input image into at least one box based on characteristics of each character, connecting adjacent characters included in the at least one box in a plurality of directions to form a plurality of character strings, identifying a frequency of use of each of the plurality of character strings based on a word database including words used by a plurality of users, and extracting one of the plurality of character strings according to the frequency of use.

Although the present disclosure has been described with reference to the accompanying drawings, the scope of rights of the present disclosure is determined by the claims described below and should not be construed as being limited to the above-described embodiments and/or drawings. It should be clearly understood that improvements, changes, and modifications that are obvious to those skilled in the art with respect to the invention described in the claims are included within the scope of rights of the present disclosure.

## Claims

1. An electronic apparatus comprising:
memory for storing an input image; and
a processor,
wherein the processor is configured to:
group characters included in the input image into at least one box based on characteristics of each character;
connect adjacent characters included in the at least one box in a plurality of directions to form a plurality of character strings;
identify a frequency of use for each of the plurality of character strings based on a word database including words used by a plurality of users; and
extract one of the plurality of character strings according to the frequency of use.

2. The electronic apparatus of claim 1, wherein the processor is configured to:
based on characters included in the input image being divided into a plurality of boxes, identify a connection possibility between characters included in each of the plurality of boxes based on positions and distances between the plurality of boxes;
connect characters having the connection possibility to form a character string;
identify a frequency of use for the character string based on the word database; and
based on the frequency of use exceeding a threshold value, extract the character string.

3. The electronic apparatus of claim 2, wherein the processor is configured to form a first character string by connecting adjacent characters included in the at least one box in a horizontal direction, a second character string by connecting the adjacent characters in a vertical direction, and a third character string by connecting the adjacent characters in a diagonal direction, identify a frequency of use for each character string based on the word database, and extract a character string having an identified frequency of use exceeding the threshold value.

4. The electronic apparatus of claim 3, wherein the processor is configured to:
based on a plurality of words being included in at least one of the first to third character strings, identify a frequency of use for each word based on the word database; and
extract at least one word having an identified frequency of use exceeding the threshold value.

5. The electronic apparatus of claim 2, wherein the processor is configured to:
identify characters included in the input image on a character-by-character basis; and
group a plurality of characters into one box when at least one of a font, a size, and a color of each of the characters falls within a similar range and the plurality of characters are adjacently arranged in a horizontal direction, a vertical direction, or a diagonal direction.

6. The electronic apparatus of claim 5, further comprising:
a camera;
a display; and
a communicator,
wherein the input image includes a captured image obtained by the camera or a live view image corresponding to light incident through the camera; and
wherein the processor is configured to search for information corresponding to the extracted character string from at least one external apparatus connected through the communicator, and control the display to display a search result.

7. The electronic apparatus of claim 1, further comprising:
a communicator configured to perform communication with an external apparatus in which the word database is stored,
wherein the processor is configured to:
transmit the plurality of character strings to the external apparatus through the communicator, and receive information regarding a frequency of use for each of the plurality of character strings from the external apparatus.

8. A word extraction method using an electronic apparatus, comprising:
grouping characters included in an input image into at least one box based on characteristics of each character;
connecting adjacent characters included in an at least one box in a plurality of directions to form a plurality of character strings;
identifying a frequency of use for each of the plurality of character strings based on a word database including words used by a plurality of users; and
extracting one of the plurality of character strings according to the frequency of use.

9. The method of claim 8, further comprising:
based on characters included in the input image being divided into a plurality of boxes, identifying a connection possibility between characters included in each of the plurality of boxes based on positions and distances between the plurality of boxes;
connecting characters having the connection possibility to form a character string;
identifying a frequency of use for the character string based on the word database; and
based on the frequency of use exceeding a threshold value, extracting the character string.

10. The method of claim 9, wherein the forming a plurality of character strings comprises:
forming a first character string by connecting adjacent characters included in the at least one box in a horizontal direction, a second character string by connecting the adjacent characters in a vertical direction, and a third character string by connecting the adjacent characters in a diagonal direction.

11. The method of claim 10, further comprising:
based on a plurality of words being included in at least one of the first to third character strings, identifying a frequency of use for each word based on the word database; and
extracting at least one word having an identified frequency of use exceeding the threshold value.

12. The method of claim 8, wherein the grouping characters included in an input image into at least one box based on characteristics of each character comprises:
identifying characters included in the input image on a character-by-character basis; and
grouping a plurality of characters into one box when at least one of a font, a size, and a color of each of the characters falls within a similar range and the plurality of characters are adjacently arranged in a horizontal direction, a vertical direction, or a diagonal direction.

13. The method of claim 12, further comprising:
searching for information corresponding to the extracted character string from at least one external apparatus and displaying a search result,
wherein the input image includes a captured image or a live view image corresponding to incident light.

14. The method of claim 8, further comprising:
transmitting the plurality of character strings to an external apparatus in which the word database is stored, and receiving information regarding a frequency of use for each of the plurality of character strings from the external apparatus.

15. A non-transitory computer-readable recording medium storing one or more instructions executed by an electronic apparatus to perform a word extraction method, the method comprising:
grouping characters included in an input image into at least one box based on characteristics of each character;
connecting adjacent characters included in an at least one box in a plurality of directions to form a plurality of character strings;
identifying a frequency of use for each of the plurality of character strings based on a word database including words used by a plurality of users; and
extracting one of the plurality of character strings according to the frequency of use.
